# EUROPÄISCHE PATENTSCHRIFT

(11) **EP 1 422 415 B1**
(45) Veröffentlichungstag und Bekanntmachung des Hinweises auf die Patenterteilung: **27.12.2006**
(21) Anmeldenummer: 04003211.2
(22) Anmeldetag: 02.03.2000
(51) Int. Cl.: F02M 35/10

(54) **Sauganlage für eine Brennkraftmaschine**
Intake device for an internal combustion engine
Dispositif d'admission pour un moteur à combustion interne

(30) Priorität: 08.03.1999 DE 19909850
(43) Veröffentlichungstag der Anmeldung: 26.05.2004
(62) Teilanmeldung aus: 00915123.4
(73) Patentinhaber: MAHLE Filtersysteme GmbH, 70376 Stuttgart (DE); Dr.Ing. h.c. F. Porsche Aktiengesellschaft, 71287 Weissach (DE)
(72) Erfinder: Brodesser, Kay, 71277 Rutesheim (DE); Despling, Hans-Peter, 89522 Heidenheim (DE); Jensen, Hans, 73237 Kirchheim (DE); Kachler, Günter, 74379 Ingersheim (DE); Schneider, Horst, 71336 Waiblingen (DE); Stehlig, Jürgen, 72666 Neckartailfingen (DE); Kelm, Joachim, 75177 Pforzheim (DE); Dieterle, Frank, 71254 Ditzingen (DE)
(74) Vertreter: Patentanwalts-Partnerschaft Rotermund + Pfusch + Bernhard

(56) Entgegenhaltungen:
- EP-A- 0 155 685
- EP-A- 0 177 794
- US-A- 5 273 010
- US-A- 5 630 386
- US-A- 5 636 605
- US-A- 5 715 782

## Beschreibung

Die Erfindung betrifft eine Sauganlage aus Kunststoff, die bei einer Brennkraftmaschine die über eine Luftzuführung für die Verbrennung in der Brennkraftmaschine vorgesehene Luft auf einzelne Brennkammern der Brennkraftmaschine verteilt. Die Erfindung betrifft außerdem ein Verfahren zur Herstellung einer derartigen Sauganlage.

Üblicherweise weist eine derartige Sauganlage einen Luftverteiler auf, der an die genannte Luftzuführung der Brennkraftmaschine angeschlossen ist und in dem sich die zugeführte Luft sammelt bzw. auf einzelne Saugrohre verteilt. Diese Saugrohre münden dabei einenends in den Luftverteiler und anderenends an der jeweils zugeordneten Brennkammer der Brennkraftmaschine. Zweckmäßigerweise ist für den Anschluß der Saugrohre an die Brennkammern bzw. an den Motorblock der Brennkraftmaschine ein Flansch vorgesehen, der mit den jeweiligen Saugrohren verbunden ist.

Aus der DE 42 16 255 A1 ist eine Sauganlage der eingangs genannten Art bekannt, deren Luftverteiler mit den Saugrohren einteilig ausgebildet und in Blasformtechnik hergestellt ist. Auch die EP 0 567 702 B1 zeigt eine solche Sauganlage, deren Luftverteiler mit den Saugrohren einteilig ausgebildet und in Blasformtechnik hergestellt ist, wobei an die Saugrohre ein Flansch angespritzt wird.

Aus der US 5 630 386 A ist eine Sauganlage mit den Merkmalen des Oberbegriffs des Anspruchs 1 bekannt, bei der das Luftverteilermodul, die Saugrohrmodule und die Flanschmodule aus Metall hergestellt sind.

Eine derartige Sauganlage wird, insbesondere aus Gewichtsgründen, bei modernen Brennkraftmaschinen aus Kunststoff hergestellt. Aufgrund der gekrümmten Form der Saugrohre ist die Herstellung der Sauganlage jedoch relativ aufwendig. Eine bekannte Sauganlage wird beispielsweise aus zwei komplementären Halbteilen gebildet, die jeweils durch ein Spritzgußverfahren hergestellt sind und komplexe Formen aufweisen. Beide Halbteile weisen dabei jeweils einen halbschalenartigen Bestandteil der Saugrohre auf. Erst durch die Verbindung beider Halbteile werden die Saugrohre vollständig ausgebildet. Zur Verbindung der beiden Halbteile wird ein Schweißverfahren, insbesondere ein Reibschweißverfahren, durchgeführt, bei dem vollständig um die Halbteile und um jede Saugrohrhalbschale umlaufende Schweißkragen miteinander verbunden werden. Bei einer derart ausgebildeten Sauganlage ist wegen den Schweißkragen ein Mindestabstand zwischen benachbarten Saugrohren erforderlich, um das jeweilige Schweißverfahren zur Verbindung der Halbteile durchführen zu können. Die bekannte Sauganlage kann daher nicht für eine besonders kompakt ausgestaltete Brennkraftmaschine verwendet werden.

Bei einer anderen Sauganlage wird zumindest ein die Saugrohre vollständig enthaltender komplexer Abschnitt einteilig als Spritzgußbauteil mit Hilfe eines Kernschmelzverfahrens hergestellt. Diese Sauganlage kann aufgrund der fehlenden Schweißkragen so ausgebildet werden, daß sie auch für relativ kompakte Brennkraftmaschinen verwendet werden kann. Jedoch ist ein Spritzguß mit einem Kernschmelzverfahren kostenintensiv.

Darüber hinaus besteht bei den bekannten Kunststoffsauganlagen der Nachteil, daß jede kleine Änderung in der Ausgestaltung der Sauganlage, um diese beispielsweise an Anbaubedingungen, Motortypen od.dgl. anzupassen, stets mit hohen Werkzeugkosten verbunden ist. Denn die komplex geformten Spritzgußteile erfordern entsprechend aufwendige und daher teure Werkzeuge.

Die vorliegende Erfindung beschäftigt sich mit dem Problem, für eine Sauganlage der eingangs genannten Art eine Ausführungsform anzugeben, die relativ preiswert an unterschiedliche Einbausituationen, Motortypen od.dgl. angepaßt werden kann.

Dieses Problem wird erfindungsgemäß durch eine Sauganlage mit den Merkmalen des Anspruches 1 gelöst.

Die Erfindung beruht auf dem allgemeinen Gedanken, die einzelnen Bestandteile der Sauganlage, zumindest den Luftverteiler, die Saugrohre und den Flansch, jeweils als einteilige Module auszubilden, die nach Art eines Baukastensystems zu beliebigen Konfigurationen der Sauganlage miteinander verbunden werden können. Insbesondere können verschiedene Saugrohrmodule, Luftverteilermodule und Flanschmodule vorgesehen bzw. hergestellt werden, wobei die jeweiligen Verbindungsstellen bzw. Schnittstellen so weit vereinheitlicht sind, daß die verschiedenen Module vielfältig miteinander kombiniert werden können.

Die Flexibilität einer derartig aufgebauten Sauganlage liegt auf der Hand, da einerseits für Veränderungen, die nur einen Bestandteil der Sauganlage betreffen, lediglich die diesbezüglichen Herstellungskosten, insbesondere Werkzeugkosten, aufgebracht werden müssen, da die übrigen Bestandteile der Sauganlage unverändert weiterverwendet werden können. Zum anderen ergibt sich dadurch auch die Möglichkeit, parallel unterschiedlich konfigurierte Sauganlagen herzustellen. Beispielsweise können dieselben Saugrohrmodule sowohl für einen 4-Zylinder-Motor als auch für einen 8-Zylinder-Motor verwendet werden. Während bei einer herkömmlichen Sauganlage zur Herstellung von zwei unterschiedlichen Ausführungsformen regelmäßig auch die doppelten Herstellungskosten anfallen, sind bei der erfindungsgemäßen Sauganlage die Kosten zur Herstellung unterschiedlicher Varianten erheblich niedriger. Auf diese Weise ergibt sich auch für die Ausgestaltung der damit auszustattenden Brennkraftmaschine mehr Flexibilität.

Entsprechend einer bevorzugten Ausführungsform kann jedes Saugrohrmodul als Blasteil ausgebildet sein, d.h. das Saugrohrmodul ist dann ein durch ein Blasformverfahren hergestelltes Bauteil. Damit das Saugrohrmodul als Blasteil hergestellt werden kann, muß es aus einem Kunststoff bestehen, der eine entsprechende Viskosität aufweist. Ein als Blasteil ausgebildetes Saugrohrmodul weist eine besonders hochwertige innenliegende Oberfläche auf, wodurch die Durchströmung des Saugrohrmodules optimal gestaltet werden kann. Darüber hinaus kann ein Blasformverfahren besonders preiswert zur Ausbildung unterschiedlicher Formen des dadurch hergestellten Blasteiles variiert werden. Dementsprechend ist die Herstellung unterschiedlicher Varianten des Saugrohrmoduls und somit der Sauganlage relativ preiswert.

Gemäß einer besonders vorteilhaften Ausführungsform kann jedes Flanschmodul als Spritzteil ausgebildet sein, d.h. das Flanschmodul ist ein durch ein Spritzgußverfahren hergestelltes Bauteil, wobei dieses Flanschmodul dadurch ausgebildet wird, daß es an die zugehörigen Saugrohrmodule angespritzt wird, wobei außerdem das jeweilige Rohrende des jeweiligen Saugrohrmoduls so geformt ist, daß sich zwischen dem Saugrohrmodul und dem Flanschmodul eine formschlüssige Verbindung ausbildet. Ein solcher Formschluß wird insbesondere dadurch erzielt, daß sich der Rohrquerschnitt in Erstreckungsrichtung erweitert, wobei das angespritzte Material des Flansches diese Querschnittserweiterung umfaßt und einbettet. Durch die erfindungsgemäße Maßnahme wird das Flanschmodul bereits während seiner Herstellung mit den zugehörigen Saugrohrmodulen verbunden, so daß zusätzliche Montageschritte entfallen.

Bei einer anderen Ausführungsform, die an eine Brennkraftmaschine mit zwei Zylinderbänken, insbesondere an einen V-Motor, angepaßt ist, können zwei Flanschmodule vorgesehen sein, die jeweils einer Zylinderbank der Brennkraftmaschine zugeordnet sind, wobei die Saugrohrmodule nebeneinander angeordnet und abwechselnd mit dem einen Flanschmodul und mit dem anderen Flanschmodul verbunden sind. Insbesondere kann sich jedes Flanschmodul entlang einer Seite des Luftverteilermoduls parallel dazu erstrecken, wobei die zugehörigen Saugrohrmodule in einem von dieser Seite abgewandten Bereich des Luftverteilermoduls mit diesem verbunden sind. Bei zwei Flanschmodulen ergibt sich daher eine Konstellation, bei der sich die Flanschmodule entlang gegenüberliegender Seiten des Luftverteilermoduls erstrecken und die dem einen Flanschmodul zugeordneten Saugrohrmodule zwischen den Flanschmodulen neben den dem anderen Flanschmodul zugeordneten Saugrohrmodulen verlaufen. Jede dieser Ausführungsformen weist einen besonders kompakten Aufbau auf, der durch die erfindungsgemäße Sauganlage besonders einfach erreichbar ist.

Die Flexibilität der erfindungsgemäßen Sauganlage kann dadurch gesteigert werden, daß auch das Luftverteilermodul modular aufgebaut ist und aus einem einteiligen Luftverteileroberteilmodul und aus einem einteiligen Luftverteilerunterteilmodul besteht, wobei die Saugrohrmodule vorzugsweise mit dem Luftverteileroberteilmodul verbunden sind.

Das der Erfindung zugrundeliegende Problem wird auch durch ein Verfahren gemäß Anspruch 11 gelöst. Ein besonderer Vorteil dieses Verfahren wird darin gesehen, daß bei jeder Anformung bzw. Anbindung eines weiteren Moduls toleranzbedingte sowie durch Schrumpfvorgänge verursachte Lage- und Formabweichungen der Module korrigiert werden können, so daß die erfindungsgemäße Sauganlage schließlich relativ enge Toleranzen einhalten kann.

Weitere wichtige Merkmale und Vorteile der erfindungsgemäßen Sauganlage ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine Draufsicht auf eine erfindungsgemäße Sauganlage,
- Fig. 2: eine Seitenansicht entsprechend dem Pfeil II in Fig. 1 auf die Sauganlage,
- Fig. 3: eine Frontansicht entsprechend dem Pfeil III in Fig. 1 auf die Sauganlage und
- Fig. 4: eine Schnittansicht entsprechend der Schnittlinie IV in Fig. 1 durch die Sauganlage, wobei die in Blickrichtung hinter der Schnittebene angeordneten Bestandteile der Sauganlage zur Vereinfachung der Darstellung weggelassen sind.

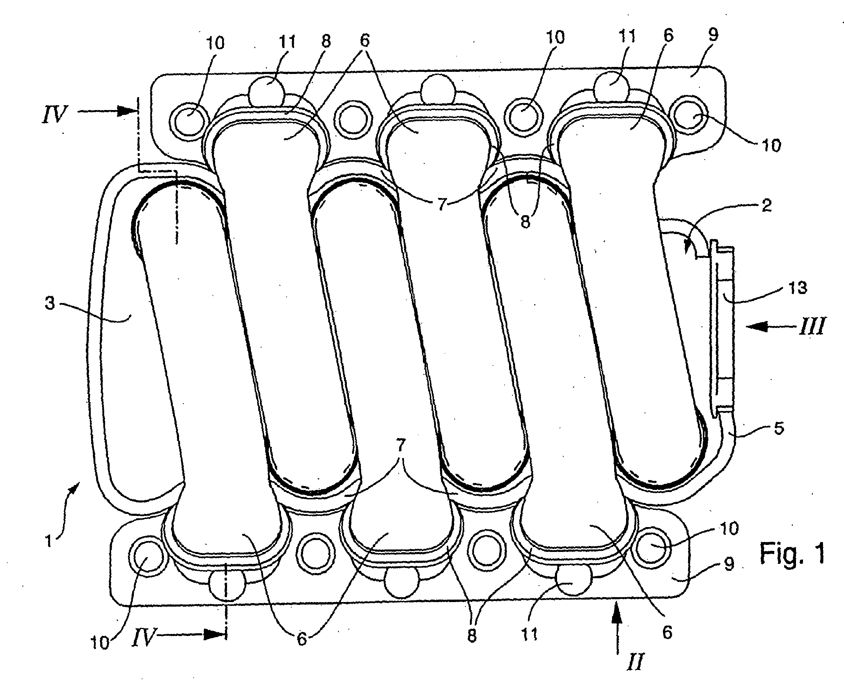

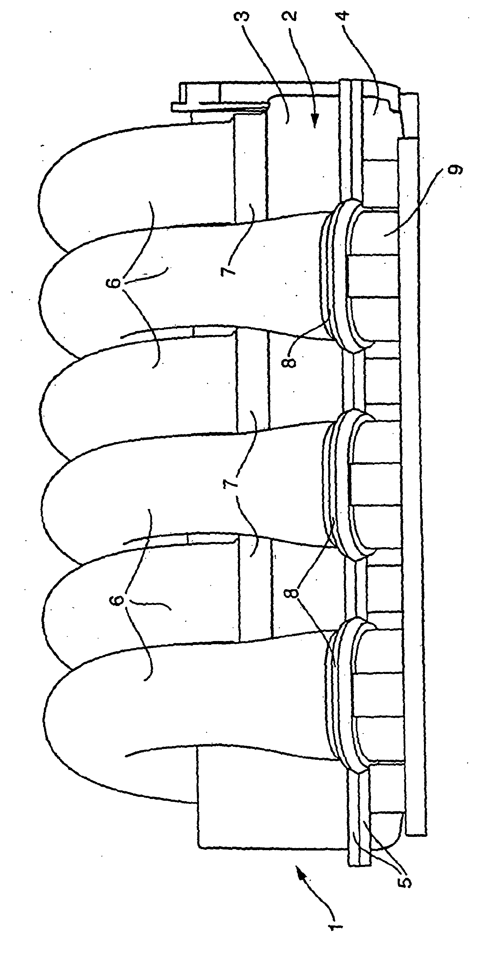

Entsprechend den Fig. 1 bis 4 weist eine erfindungsgemäße Sauganlage 1 ein Luftverteilermodul 2 auf, das modular aufgebaut ist und aus einem gemäß den Fig. 2, 3, 4 oberen einteiligen Luftverteileroberteilmodul 3 und aus einem gemäß den Fig. 2, 3, 4 unteren einteiligen Luftverteilerunterteilmodul 4 besteht. Das Luftverteileroberteilmodul 3 und das Luftverteilerunterteilmodul 4 weisen jeweils einen nach außen abstehenden, vollständig umlaufenden Kragen oder Bund 5 auf, an dem die beiden Module 3 und 4 miteinander verbunden sind.

An der Oberseite des Luftverteileroberteilmoduls 3 sind mehrere, hier sechs, jeweils einteilige Saugrohrmodule 6 angeschlossen bzw. mit dem Luftverteileroberteilmodul 3 und somit mit dem Luftverteilermodul 2 verbunden. Jedes dieser Saugrohrmodule 6 ist einem Zylinder einer nicht dargestellten Brennkraftmaschine zugeordnet und dient zur Luftversorgung der jeweils zugehörigen Brennkammer. Während die Luftverteilermodule 6 an ihrem einen Rohrende 7 mit dem Luftverteilermodul 2 verbunden sind, sind sie mit ihrem anderen Rohrende 8 mit einem Flanschmodul 9 verbunden, das an der Brennkraftmaschine befestigbar ist. Zu diesem Zweck weist das Flanschmodul 9 entsprechende Montageöffnungen 10 auf.

Bei der in den Figuren dargestellten Ausführungsform ist die Sauganlage 1 für einen 6-Zylinder-V-Motor konfiguriert, so daß dementsprechend zwei Flanschmodule 9 vorgesehen sind. Die Flanschmodule 9 erstrecken sich dabei jeweils entlang einer Seite des Luftverteilermoduls 2. Die sechs Saugrohrmodule 6 sind nebeneinander angeordnet und abwechselnd mit dem einen bzw. mit dem anderen Flanschmodul 9 verbunden. Darüber hinaus sind die Saugrohrmodule 6 jedes Flanschmodules 9 jeweils in einem dem anderen Flanschmodul 9 zugewandten Bereich des Luftverteilermoduls 2 an das Luftverteilermodul 2 angeschlossen, wodurch benachbarte Saugrohrmodule 6 oberhalb des Luftverteilermoduls 2 parallel zueinander und aneinander entlang verlaufen. Wie aus den Fig. 1 bis 3 zu entnehmen ist, ergibt sich dadurch eine besonders kompakte Bauform für die erfindungsgemäße Sauganlage 1.

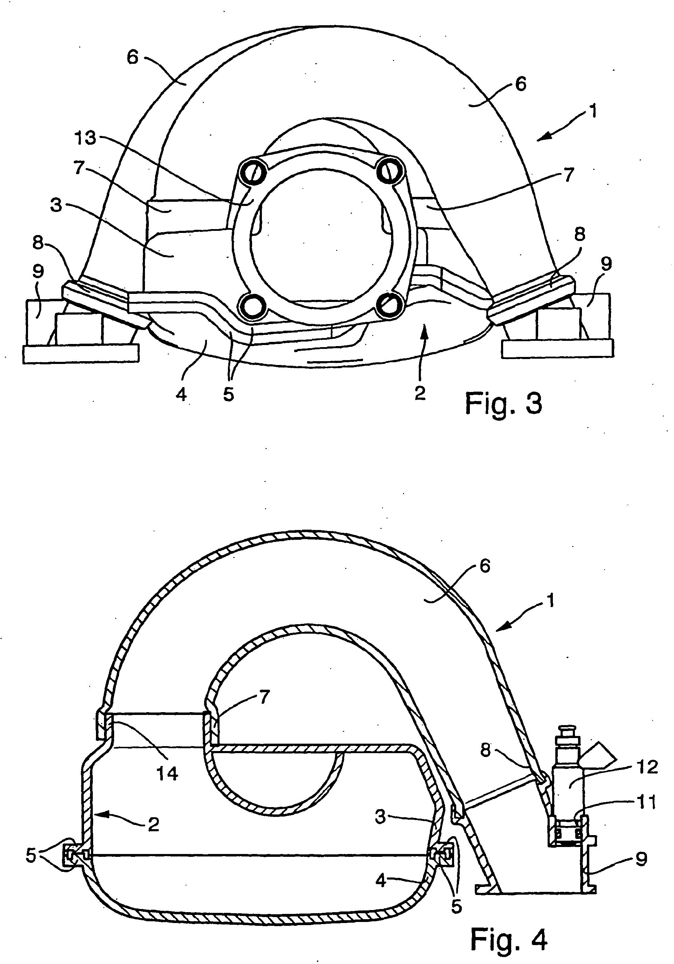

In den Flanschmodulen 9 sind Aufnahmen 11 ausgespart, in denen ein Einspritzventil 12 montierbar ist, was in Fig. 4 angedeutet ist.

Das Luftverteileroberteilmodul 3 ist außerdem an einer Frontseite der Sauganlage 1 mit einem Anschluß 13 ausgestattet, mit dem die Sauganlage 1 an eine Luftzuführung der Brennkraftmaschine anschließbar ist. Die durch diese Luftzuführung der Sauganlage 1 zugeführte Luft dringt zunächst in das Luftverteilermodul 2 ein, wird dort gesammelt und dann auf die einzelnen Saugrohrmodule 6 verteilt, von wo aus die zugeführte Luft schließlich in die Brennkammern der Brennkraftmaschine gelangt.

Die Herstellung der erfindungsgemäßen Sauganlage 1 erfolgt vorzugsweise wie folgt:

Zunächst werden die Saugrohrmodule 6 durch ein geeignetes Herstellverfahren, z.B. Blasformverfahren oder Spritzgußverfahren, hergestellt. Durch die Herstellung als separate Module ist es möglich, die Form der Saugrohrmodule 6 relativ einfach zu variieren, beispielsweise kann der Rohrdurchmesser, der Krümmungsradius und die Rohrlänge auf diese Weise an unterschiedliche Konfigurationen der Brennkraftmaschine angepaßt werden. Parallel zur Herstellung der Saugrohrmodule 6 können das Luftverteileroberteilmodul 3 und das Luftverteilerunterteilmodul 4 separat, z.B. durch ein herkömmliches Spritzgußverfahren hergestellt werden.

Die jeweils einem Flanschmodul 9 zugeordneten Saugrohrmodule 6 werden dann zumindest mit ihren Rohrenden 8 in ein Spritzgußwerkzeug eingelegt und gegebenenfalls ausgerichtet. Im Anschluß daran kann ein Spritzgußverfahren ablaufen, bei dem das jeweilige Flanschmodul 9 ausgebildet wird. Dabei ist das dem jeweiligen Flansch 9 zugeordnete Rohrende 8 der Saugrohrmodule 6 so ausgebildet, daß es bei dem Spritzvorgang beidseitig, d.h. bezüglich des Saugrohrmoduls 6 innen und außen, vom Material des Flanschmodules 9 eingefaßt wird. Darüber hinaus erweitert sich die Wandstärke des Saugrohrmoduls 6 in diesem Rohrende 8, so daß sich insgesamt eine hochwirksame Verankerung des Saugrohrmodules 6 im Flanschmodul 9 ausbildet. Das Rohrende 8 ist somit zumindest formschlüssig mit dem Flanschmodul 9 verbunden. Um die Verbindung zwischen Saugrohrmodul 6 und Flanschmodul 9 auch für eine lange Lebenszeit hochwertig fest und dicht auszubilden, wird das Flanschmodul 9 mittels eines speziellen Verfahrens derart an den Saugrohrmodulen 6 angebracht, daß sich eine stoffschlüssige Verbindung ausbildet. Dabei werden die Kunststoffe der beiden Module 6 und 9 im Verbindungsbereich nach Art eines Schweißvorganges miteinander verschmolzen. Die Kunststoffe sind dementsprechend kompatibel gewählt.

Im Anschluß daran werden die anderen Rohrenden 7 der Saugrohrmodule 6 mit dem Luftverteileroberteilmodul 3 verbunden, wozu hier der Anschluß des Saugrohrmodules 6 an das Luftverteilermodul 2 als Steckverbindung ausgebildet ist. Das dem Luftverteilermodul 2 zugeordnete Rohrende 7 ist dazu als Außenstutzen ausgebildet, und das Luftverteileroberteilmodul 3 weist einen Innenstutzen 14 auf. Die ineinandergesteckten Stutzen 7 und 14 können dann miteinander verbunden werden, wobei vorzugsweise ein Schweißverfahren angewandt wird, um eine möglichst innige, vorzugsweise stoffschlüssige oder chemische Verbindung zwischen dem Saugrohrmodul 6 und dem Luftverteilermodul 2 auszubilden. Ebenso kann eine Klebverbindung oder eine Schrumpfverbindung oder eine Kombination verschiedener Verbindungstechniken ausgebildet werden. Vor oder während der Anbindung des Luftverteilermoduls 2 an die Saugrohrmodule 6 kann gegebenenfalls eine Ausrichtung der Sauganlagenbestandteile durchgeführt werden.

Schließlich kann das Luftverteilerunterteilmodul 4 mit einem herkömmlichen Reibschweißverfahren an das Luftverteileroberteilmodul 3 angebunden werden. Es ist klar, daß die Verbindung der beiden Module 3 und 4 des Luftverteilermoduls 2 hier bereits vorab durchgeführt werden kann, so daß dementsprechend das komplette Luftverteilermodul 2 mit den Saugrohrmodulen 6 verbunden wird.

## Patentansprüche

1. Modular aufgebaute Sauganlage für eine Brennkraftmaschine
- mit einem Luftverteiler, der als Luftverteilermodul (2) ausgestaltet und an eine Luftzuführung der Brennkraftmaschine anschließbar ist,
- mit mehreren Saugrohren, die jeweils als einteilige Saugrohrmodule (6) ausgestaltet und jeweils einer Brennkammer der Brennkraftmaschine zugeordnet sind, und
- mit zwei einteiligen Flanschen, die jeweils als einteilige Flanschmodule (9) ausgestaltet sind und mit denen jeweils mindestens eines der Saugrohrmodule (6) verbunden ist und die jeweils an der Brennkraftmaschine befestigbar sind,
- wobei die Saugrohrmodule (6) jeweils an ihrem einen Rohrende (7) mit dem Luftverteilermodul (2) und an ihrem anderen Rohrende (8) mit einem der Flanschmodule (9) verbunden sind,
- wobei zwei Flanschmodule (9) vorgesehen sind, die jeweils einer Zylinderbank der Brennkraftmaschine zugeordnet sind,
- wobei die nebeneinander angeordneten Saugrohrmodule (6) abwechselnd mit dem einen Flanschmodul (9) und mit dem anderen Flanschmodul (9) verbunden sind,
**dadurch gekennzeichnet,**
- **dass** das Luftverteilermodul (2), die Saugrohrmodule (6) und die Flanschmodule (9) aus Kunststoff hergestellt sind,
- **dass** jedes Flanschmodul (9) als Spritzteil, d.h. als ein durch ein Spritzgussverfahren hergestelltes Bauteil, ausgebildet ist, das an das wenigstens eine Saugrohrmodul (6) angespritzt ist,
- wobei das jeweilige Rohrende (8) des Saugrohrmoduls (6) so geformt ist, dass sich zwischen Saugrohrmodul (6) und Flanschmodul (9) eine formschlüssige Verbindung ausbildet.

2. Sauganlage nach Anspruch 1.
**dadurch gekennzeichnet,**
**dass** jedes Saugrohrmodul (6) als Blasteil, d.h. als ein durch ein Blasformverfahren hergestelltes Bauteil, ausgebildet ist.

3. Sauganlage nach Anspruch 1,
**dadurch gekennzeichnet,**
**dass** jedes Saugrohrmodul (6) als Spritzteil, d.h. als ein durch ein Spritzgußverfahren hergestelltes Bauteil, ausgebildet ist.

4. Sauganlage nach Anspruch 3,
**dadurch gekennzeichnet,**
**dass** das zur Herstellung der Saugrohrmodule (6) verwendete Spritzgußverfahren mit einer Drehschiebertechnik oder mit einer Halbschalentechnik arbeitet.

5. Sauganlage nach einem der Ansprüche 1 bis 4,
**dadurch gekennzeichnet,**
**dass** sich das Flanschmodul (9) entlang einer Seite des Luftverteilermoduls (2) parallel dazu erstreckt und dass das wenigstens eine Saugrohrmodul (6) in einem von dieser Seite abgewandten Bereich des Luftverteilermoduls (2) mit diesem verbunden ist.

6. Sauganlage nach einem der Ansprüche 1 bis 5,
**dadurch gekennzeichnet,**
**dass** die Saugrohrmodule (6) jeweils an der Oberseite des Luftverteilermoduls (2) mit diesem verbunden sind.

7. Sauganlage nach einem der Ansprüche 1 bis 6,
**dadurch gekennzeichnet,**
**dass** jedes Saugrohrmodul (6) durch ein Schweißverfahren mit dem Luftverteilermodul (2) verbunden ist.

8. Sauganlage nach einem der Ansprüche 1 bis 7,
**dadurch gekennzeichnet,**
**dass** das Luftverteilermodul (2) modular aufgebaut und aus einem einteiligen Luftverteileroberteilmodul (3) aus Kunststoff und aus einem einteiligen Luftverteilerunterteilmodul (4) aus Kunststoff besteht, wobei die Saugrohrmodule (6) mit dem Luftverteileroberteilmodul (3) verbunden sind.

9. Sauganlage nach einem der Ansprüche 1 bis 8,
**dadurch gekennzeichnet,**
**dass** die Module (2, 3, 4, 6, 9) aus Polyamid-Kunststoff hergestellt sind.

10. Sauganlage nach einem der Ansprüche 1 bis 9,
**dadurch gekennzeichnet,**
**dass** die Module (2, 3, 4, 6, 9) aus faserverstärktem, insbesondere glasfaser- oder kohlefaserverstärktem, Kunststoff, insbesondere Polyamid-Kunststoff, hergestellt sind.

## Claims

1. A modular intake device for an internal combustion engine
- having an air distributor designed as an air distributor module (2) connected to an air inlet of the internal combustion engine,
- having multiple intake manifolds, each being designed as a one-piece intake manifold module (6) and each being assigned to a combustion chamber of the internal combustion engine, and
- having two one-piece flanges, each being designed as a one-piece flange module (9) and connected to at least one of the intake manifold modules (6), each being connectable to the internal combustion engine,
- whereby the intake manifold modules (6) are each connected to the air distributor module (2) at one pipe end (7) and to one of the flange modules (9) at the other pipe end (8),
- whereby two flange modules (9) are provided, each being assigned to a cylinder bank of the internal combustion engine,
- whereby the intake manifold modules (6) arranged side-by-side are alternately connected to the one flange module (9) and to the other flange module (9),
**characterized in that**
- the air distributor module (2), the intake manifold modules (6) and the flange modules (9) are all made of plastic,
- each flange module (9) is designed as an injection-molded part, i.e., as a part manufactured by an injection molding process, said part being integrally molded onto the at least one intake manifold module (6),
- whereby the respective pipe end (8) of the intake manifold module (6) is shaped so that a form-fitting connection is formed between the intake manifold module (6) and the flange module (9).

2. The intake device according to Claim 1, **characterized in that** each intake manifold module (6) is designed as blow-molded part, i.e., as a part manufactured by a blow molding method.

3. The intake device according to Claim 1, **characterized in that** each intake manifold module (6) is designed as an injection-molded part, i.e., as a part produced by an injection molding process.

4. The intake device according to Claim 3, **characterized in that** the injection molding method used to produce the intake manifold modules (6) with a rotary slide valve technique or with a half-shell technique.

5. The intake device according to any one of Claims 1 through 4, **characterized in that** the flange module (9) extends along one side of the air distributor module (2) and parallel thereto and the at least one intake manifold module (6) is connected to the module in an area of the air distributor (2) facing away from this side.

6. The intake device according to any one of Claims 1 through 5, **characterized in that** the intake manifold modules (6) are each connected to the air distributor module (2) on the top side thereof.

7. The intake device according to any one of Claims 1 through 6, **characterized in that** each intake manifold module (6) is connected to the air distributor module (2) by a welding method.

8. The intake device according to any one of Claims 1 through 7, **characterized in that** the air distributor module (2) has a modular design and is made of a one-piece air distributor top part module (3) made of plastic and a one-piece air distributor bottom part module (4) made of plastic whereby the intake manifold modules (6) are connected to the air distributor top part module (3).

9. The intake device according to any one of Claims 1 through 8, **characterized in that** the modules (2, 3, 4, 6, 9) are made of polyamide plastic.

10. The intake device according to any one of Claims 1 through 9, **characterized in that** the modules (2, 3, 4, 6, 9) are made of fiber-reinforced plastic, in particular glass fiber-reinforced or carbon fiber reinforced plastic, in particular polyamide plastic.

## Revendications

1. Dispositif d'admission de structure modulaire pour un moteur à combustion interne, comprenant
- un diffuseur d'air, qui est configuré sous forme de module de diffuseur d'air (2) et peut être raccordé à une arrivée d'air du moteur à combustion interne,
- plusieurs tubulures d'admission, configurées chacune sous forme de module de tubulure d'admission (6) monobloc et respectivement associées à une chambre de combustion du moteur à combustion interne, et
- deux brides monobloc, qui sont configurées chacune sous forme de module de bride monobloc (9), avec lesquelles est respectivement assemblé au moins l'un des modules de tubulures d'admission (6), et qui peuvent être fixées chacune sur le moteur à combustion interne, dispositif dans lequel
- les modules de tubulures d'admission (6) sont assemblés chacun sur l'une de leurs extrémités (7) avec le module de diffuseur d'air (2) et sur leur autre extrémité (8) avec l'un des modules de brides (9),
- deux modules de brides (9) sont prévus, qui sont respectivement associés à un bloc-cylindre du moteur à combustion interne,
- les modules de tubulures d'admission (6) juxtaposés sont assemblés en alternance avec l'un des modules de brides (9) et avec l'autre module de bride (9),
**caractérisé en ce que**
- le module de diffuseur d'air (2), les modules de tubulures d'admission (6) et les modules de brides (9) sont fabriqués en matière plastique,
- chaque module de bride (9) est réalisé sous forme de pièce injectée, c'est-à-dire sous forme d'un composant fabriqué par un procédé de moulage par injection, qui est injecté sur le au moins module de tubulure d'admission (6),
- l'extrémité de tubulure (8) respective du module de tubulure d'admission (6) étant formée de sorte qu'il se réalise un assemblage par coopération de forme entre le module de tubulure d'admission (6) et le module de bride (9) .

2. Dispositif d'admission suivant la revendication 1, **caractérisé en ce que** chaque module de tubulure d'admission (6) est réalisé sous forme de pièce soufflée, c'est-à-dire sous forme d'un composant fabriqué par un procédé de soufflage.

3. Dispositif d'admission suivant la revendication 1, **caractérisé en ce que** chaque module de tubulure d'admission (6) est réalisé sous forme de pièce injectée, c'est-à-dire sous forme d'un composant fabriqué par un procédé de moulage par injection.

4. Dispositif d'admission suivant la revendication 3, **caractérisé en ce que** le procédé de moulage par injection, utilisé pour la fabrication des modules de tubulures d'admission (6), fonctionne avec une technique de tiroirs rotatifs ou une technique de demi-coques.

5. Dispositif d'admission suivant l'une des revendications 1 à 4, **caractérisé en ce que** le module de bride (9) s'étend le long d'un côté du module de diffuseur d'air (2) parallèlement à ce dernier et que le au moins un module de tubulure d'admission (6) est assemblé avec le module de diffuseur d'air (2) dans une zone de ce dernier opposée à ce côté.

6. Dispositif d'admission suivant l'une des revendications 1 à 5, **caractérisé en ce que** les modules de tubulures d'admission (6) sont assemblés chacun avec le module de diffuseur d'air (2) sur le côté supérieur de ce dernier.

7. Dispositif d'admission suivant l'une des revendications 1 à 6, **caractérisé en ce que** chaque module de tubulure d'admission (6) est assemblé avec le module de diffuseur d'air (2) par un procédé de soudage.

8. Dispositif d'admission suivant l'une des revendications 1 à 7, **caractérisé en ce que** le module de diffuseur d'air (2) a une structure modulaire et est constitué d'un module supérieur de diffuseur d'air (3) monobloc en matière plastique et d'un module inférieur de diffuseur d'air (4) monobloc en matière plastique, les modules de tubulures d'admission (6) étant assemblés avec le module supérieur de diffuseur d'air (3).

9. Dispositif d'admission suivant l'une des revendications 1 à 8, **caractérisé en ce que** les modules (2, 3, 4, 6, 9) sont fabriqués en matière plastique polyamide.

10. Dispositif d'admission suivant l'une des revendications 1 à 9, **caractérisé en ce que** les modules (2, 3, 4, 6, 9) sont fabriqués en matière plastique renforcée par des fibres, en particulier par des fibres de verre ou fibres de carbone, en particulier en matière plastique polyamide.
